# EUROPEAN PATENT APPLICATION

(11) **EP 4 737 316 A2**
(43) Date of publication of application: **06.05.2026**
(21) Application number: 26165574.0
(22) Date of filing: 29.03.2022
(51) Int. Cl.: B64D 11/06

(54) **SEAT UNIT AND TABLE UNIT**

(62) Divisional of application: 22935114.3
(71) Applicant: JAMCO CORPORATION, Mitaka-shi, Tokyo 181-8571 (JP)
(72) Inventor: HAGIWARA, Hisaya, TOKYO, 1900011 (JP); FUKUTOMI, Sachiko, TOKYO, 1900011 (JP)
(74) Representative: Novaimo

(57) **Abstract**

Provided are a seat unit and a table unit that realize a pleasant flight even in an aircraft having a fuselage that has been reduced in size. The seat unit disposed between a window and an aisle of an aircraft includes a seat including a seat section disposed on the window side, and a backrest disposed on the aisle side, and a table disposed between the window and the seat section and supported in a fixed manner at least at two points, wherein a center axis of the seat is approximately orthogonal to an axis of the aircraft in a front-rear direction when viewed along a direction orthogonal to a floor surface of the aircraft.

## Description

### [Technical Field]

The present invention relates to seat units and table units.

### [Background Art]

Small-sized fuselages are often adopted in conventional aircrafts used for flights of relatively short distances that take approximately three to six hours, in which a single aisle is arranged at a center of the fuselage along an axis of the aircraft in a front-rear direction, and seats facing the front direction are arranged in double rows on both sides of the aisle.

In such aircrafts, for example, movable tables, such as a type of table that is disposed in a swingable manner on a backrest of a seat arranged on a front side and swung to a horizontal position for use, or a type of table that is accommodated in a folded manner in an armrest of the seat and drawn out for use, are often adopted as tables used for eating and drinking, by which efficient use of space is enabled.

In the case of such movable tables, the table is often supported in a cantilever configuration via a link or the like, but in order to ensure a stable support, it is necessary to increase the size and rigidity of a movable mechanism such as a link or a connecting portion, which may cause increase of installation space or increase of weight of the entire table. Therefore, it is difficult to apply such tables having a large-sized movable mechanism to aircrafts especially with a small-sized fuselage.

Further, if a passenger seated on a window-side seat wishes to access the aisle when a passenger seated on an aisle-side seat is using a movable table, the movable table must be temporarily stored, such that there is a drawback that the usability is not good. If the flight time is short, there may relatively be a small chance of discontents of passengers being actualized, but along with the recent improvement of fuel efficiency technique, the flight distances of aircrafts are increasing. Therefore, along with the extension of flight time, there is a risk that the discontents of passengers that have not been recognized may be actualized.

In contrast, according to a transit passenger suite disclosed in Patent Document 1, a seat facing a front-rear direction of an aircraft, a seat facing a window side thereof, and a table capable of being drawn out are installed within one seat unit, such that access to the aisle is good from both seats even with the table drawn out.

### [Citation List]

### [Patent Document]

[Patent Document 1] Japanese Translation of PCT International Application Publication No. JP-T-2015-512823

### [Disclosure of the Invention]

### [Problems to be Solved by the Invention]

However, the transit passenger suite disclosed in Patent Document 1 is adopted in a first class cabin of an aircraft for middle to long-distance flights, such that there is a drawback that if the suite is applied to a short-distance flight aircraft, it occupies much space, such that the number of passengers that may board the aircraft is reduced significantly. Further, it is assumed that the passenger seated on the seat facing the front-rear direction of the aircraft and the passenger seated on the seat facing the window side thereof are not strangers, such that if strangers use the transit passenger suite disclosed in Patent Document 1, there is a drawback that private space cannot be ensured.

The object of the present invention is to provide a seat unit and a table unit that may realize a pleasant flight even on an aircraft having a fuselage that has been reduced in size.

### [Means of Solving the Problems]

In order to achieve the objects described above, a seat unit according to the present invention relates to
a seat unit disposed between a window and an aisle of an aircraft, including:
a seat including a seat section disposed on the window side, and a backrest disposed on the aisle side; and
a table disposed between the window and the seat section and supported in a fixed manner at least at two points,
wherein a center axis of the seat is approximately orthogonal to an axis of the aircraft in a front-rear direction when viewed along a direction orthogonal to a floor surface of the aircraft.

According to another aspect of the invention, the seat unit as defined above, referred as "proposition 1", can include at least one of the following examples and alternatives:
- proposition 2 : The seat unit according to proposition 1, wherein a partition panel is arranged adjacent to the seat, and wherein one end portion of the table in a width direction is supported on the partition panel.
- proposition 3 : The seat unit according to proposition 2, wherein a bassinet is disposed on a member supporting the other end portion of the table in the width direction.
- proposition 4 : The seat unit according to proposition 1, wherein a partition panel is arranged on either side of the seat, and both end portions of the table in a width direction are respectively supported on the partition panel.
- proposition 5 : The seat unit according to proposition 4, wherein the table includes a fixed portion that is supported in a fixed manner on the partition panel, and a movable portion that is movable with respect to the fixed portion, wherein a groove to which the movable portion is engaged is formed on the partition panel, and the movable portion is moved along the groove.
- proposition 6 : The seat unit according to any one of proposition 1 to 5, wherein a screen for having a projector image projected thereon is projected is disposed in a manner capable of being wound up on an upper portion of the table and facing the seat.
- proposition 7 : The seat unit according to any one of proposition 1 to 6, wherein a footrest panel or an ottoman fixed to the table or a partition panel is arranged on a lower side of the table.

In order to achieve the objects mentioned above, a table unit according to the present invention is characterized in that the table unit is disposed between a window and an aisle of the aircraft, wherein the table unit is supported in a fixed manner on a partition panel disposed in a direction approximately orthogonal to a front-rear direction axis of the aircraft. For example, the table unit as described above, also referred as "proposition 8", can additionally be defined by the following propositions :
- proposition 9 : The table unit according to proposition 8, wherein one end of the table unit is supported in a fixed manner on the partition panel arranged adjacent to a seat, and wherein the other end of the table unit is supported in a fixed manner on a member equipped with a bassinet disposed on an opposite side of the seat interposing the partition panel.
- proposition 10 : The table unit according to proposition 8, wherein both ends of the table unit are fixed to and supported by a pair of the partition panels interposing the seat.

### [Effects of the Invention]

According to the present invention, a seat unit and a table unit capable of realizing a pleasant flight even in an aircraft having a fuselage that has been reduced in size may be provided.

### [Brief Description of the Drawings]

FIG. 1 is a top view illustrating an overview of a cabin of an aircraft in which are installed seat units for an aircraft according to a first embodiment (viewed in a direction perpendicular to a floor surface of the aircraft).
FIG. 2 is a view of the seat unit taken from an aisle side over the seat.
FIG. 3 is a view of the seat unit taken from the aisle side over the seat.
FIG. 4 is a perspective view illustrating the seat unit.
FIG. 5 is a view illustrating a partition panel arranged adjacent to the seat unit of FIG. 4, viewed from the seat side of FIG. 4.
FIG. 6 is a perspective view illustrating a lower side of a table.
FIG. 7 is a perspective view illustrating the lower side of the table.
FIG. 8 is a perspective view illustrating a lower side of a table according to a first modified example.
FIG. 9 is a perspective view illustrating a periphery of a table according to a second modified example.
FIG. 10 is a view of a seat unit of according to a second embodiment taken from an aisle side over a seat.

### [Mode for Carrying out the Invention]

Hereafter, embodiments of the present embodiment will be illustrated with reference to the drawings. In the present specification, "frontward" and "rearward" respectively refer to a travelling direction of the aircraft and a direction opposite to the travelling direction. A seat unit 10 according to the present embodiment may be utilized as a seat unit for a business class cabin, for example.

### (First Embodiment)

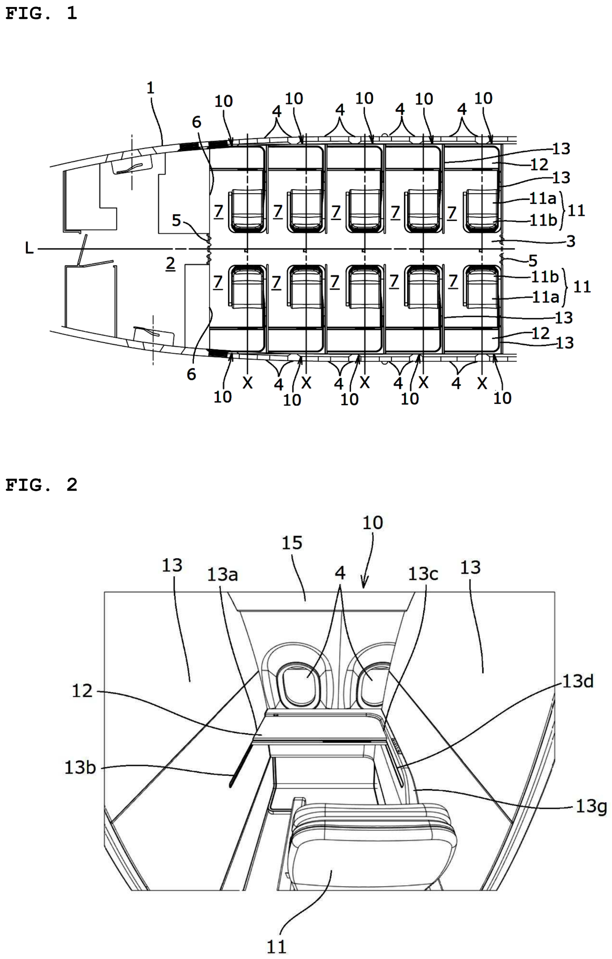

FIG. 1 is a top view overlooking a cabin of an aircraft 1 (viewed in a direction perpendicular to a floor surface 2 of the aircraft 1) in which seat units for an aircraft according to a first embodiment are installed. In FIG. 1, a left side is a head side of the aircraft 1, a right side is a rear side of the aircraft 1, and a front-rear direction axis of the aircraft 1 is denoted by L. An aisle 3 is disposed on the floor surface 2 of the aircraft 1 along the front-rear direction axis L. Further, five sets of seat units 10 are arranged on either side of and interposing the aisle 3 (10 sets in total) disposed along the aisle 3. The seat unit 10 has a symmetric arrangement and shape interposing the front-rear direction axis L. A curtain 5 is arranged on either end of the aisle 3 in order to partition the section from adjacent sections.

The seat unit 10 includes a seat 11 equipped with a seat section 11a disposed on a window 4 side of the aircraft 1 and a backrest 11b disposed on the aisle 3 side, a table 12 arranged between the window 4 and the seat section 11a, and a partition panel 13 disposed on a side portion of the seat 11. The seat 11 and the partition panel 13 are fixed to the floor surface 2.

The seat unit 10 forms a set with the partition panel 13 on the left hand side of a passenger seated on the seat 11, and since five seats 11 are arranged in a row along the front-rear direction of the aircraft 1, the seat 11 is arranged in a manner sandwiched between its own partition panel 13 (that constitutes a set of the seat unit 10 with the seat 11) and a partition panel 13 of the adjacent seat unit 10. However, the seat 11 disposed on the most frontward side of the aircraft 1 is arranged in a manner sandwiched between its own partition panel 13 and a front side wall 6. Nevertheless, the seat unit 10 may form a set with the partition panel 13 on a right hand side of the passenger seated on the seat 11.

A width of the seat 11 is made smaller than a distance between partition panels 13 interposing the seat 11, and a center of the seat 11 is either arranged in a shifted manner toward a rearward (or frontward) side of the aircraft 1 from an intermediate position of the partition panels 13 interposing the same or arranged at a center between the partition panels 13. Therefore, the seat 11 and its own partition panel 13 are in contact with each other, and a space 7 through which the passenger may access the aisle 3 is formed between the seat 11 and the partition panel 13 disposed adjacent thereto on the frontward side (or rearward side) of the aircraft 1.

As illustrated in FIG. 1, when viewed along a direction orthogonal to the floor surface 2 of the aircraft 1, a center axis X of the respective seats 11 is approximately orthogonal to the front-rear direction axis L, and the partition panel 13 extends in parallel to the center axis X. Here, the center axis X of the seat 11 refers to a straight line passing through a center point (center of gravity point) of the seat section 11a and the center point (center of gravity point) of the backrest 11b as illustrated in FIG. 1. Further, "approximately orthogonal" refers to a state in which it intersects the axis in the front-rear direction of the aircraft at an angle of 90 degrees ±5 degrees.

According to the present embodiment, the number of seats 11 being interposed between the partition panels 13 is one, such that a large number of seat units 10 may be arranged efficiently within the aircraft even though a private space of each passenger seated on the seat 11 may be ensured. Further, the passenger seated on the seat 11 may access the aisle 3 freely through the space 7 without interfering other passengers. Furthermore, since the line of sight of the passenger seated on the seat 11 is directed toward the window 4, there is an advantage in that the passenger seated on the seat 11 will not be disturbed by passengers and crew members walking on the aisle 3 arranged behind the seat 11.

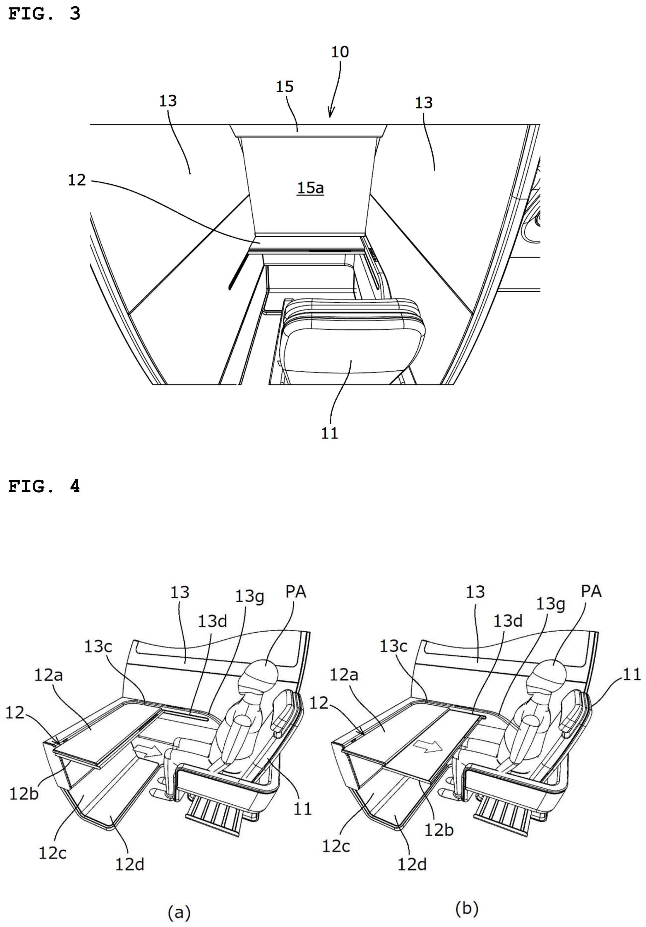

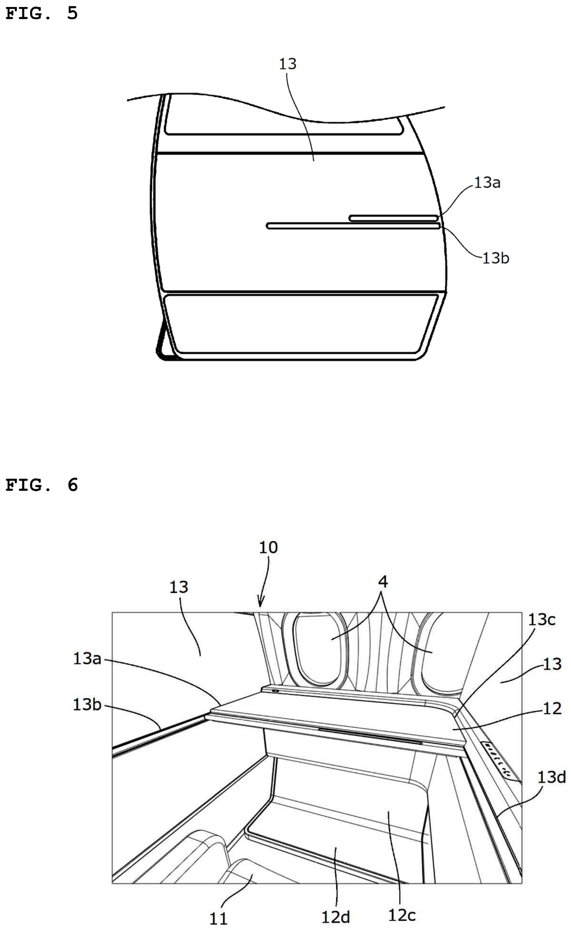

FIGs. 2 and 3 are views illustrating the seat unit 10 from the aisle side over the seat 11. FIG. 4 is a perspective view illustrating the seat unit 10, indicating a state where a passenger is seated. FIG. 5 is a view in which the partition panel 13 disposed adjacent to the seat unit 10 of FIG. 4 is viewed from the side of the seat 11 of FIG. 4.

An engagement long hole 13a that extends in parallel to the floor surface 2 and a slit groove 13b arranged adjacent thereto are formed on a wall (or a front side wall 6) on one side (left side in the drawing) of the partition panel 13 (refer to FIG. 5). Further, a frame 13g fixed to the seat 11 extends from a side portion of the seat 11 toward the window side at a position adjacent to the other wall (right side in the drawing) of the partition panel 13. An engagement long hole 13c that extends in parallel to the floor surface 2 and a slit groove 13d (refer to FIG. 4) arranged adjacent thereto are formed on the frame 13g. The slit grooves 13b and 13d are formed longer than the engagement long holes 13a and 13c. The heights from the floor surface 2 and the lengths of engagement long holes 13a and 13c and the slit grooves 13b and 13d arranged facing each other mutually correspond. The frame 13g may be fixed independently on the floor surface 2 without being fixed to the seat 11.

In FIG. 4, the table (also referred to as table unit) 12 includes a fixed portion 12a having a rectangular plate shape, and a movable portion 12b having a rectangular plate shape, which are formed somewhat longer than a distance between the partition panel 13 and the frame 13g. Both ends in the longitudinal direction of the fixed portion 12a (both ends in the center axis X direction: two points that are spaced apart in the width direction) are engaged to the engagement long holes 13a and 13c, by which both ends of the fixed portion 12a are fixed to the partition panel 13. Thereby, the table 12 which is simple and light-weight yet having a high rigidity may be realized. The fixed portion 12a may also be fixed to the partition panel 13 via a bracket.

Further, both ends in the longitudinal direction of the movable portion 12b are engaged slidably to the slit grooves 13b and 13d. Therefore, the movable portion 12b may slide arbitrarily between a stored position illustrated in FIG. 4(a) and a drawn-out position illustrated in FIG. 4(b). For example, when a passenger PA being seated on the seat 11 eats or drinks, the passenger PA draws out the movable portion 12b to the drawn-out position illustrated in FIG. 4(b) to place drinks and foods on the fixed portion 12a and the movable portion 12b which ensure a large area. Meanwhile, when the passenger PA finishes his/her meal, the passenger PA returns the movable portion 12b to the stored position illustrated in FIG. 4(a), such that the passenger PA may take a relaxed posture, and will not be obstructed when heading toward the aisle 3 through the space 7.

As illustrated in FIGs. 2 and 3, a screen unit 15 is disposed above the table 12 in a manner connecting top portions of the partition panels 13. A screen 15a (refer to FIG. 3) is disposed within the screen unit 15, and normally, the screen is stored in a manner wound up in the screen unit 15, as illustrated in FIG. 2. Therefore, the passenger seated on the seat 11 may enjoy the outside view of the aircraft through the window 4.

In contrast, as illustrated in FIG 3, the screen 15a may be drawn out of the screen unit 15, as illustrated in FIG. 3, and a hook (not shown) disposed at a center or at both ends of a lower end of the screen 15a may be hooked onto the table 12 and retained thereon (refer to FIG. 3). Thereby, the screen 15a is perpendicularly disposed in a stretched manner on the table 12, such that the passenger seated on the seat 11 may view from the front side images and videos projected on the screen 15a from a portable projector that the passenger carries or a projector installed within the fuselage (not shown). However, the method for disposing the screen 15a in a stretched manner is not limited to the above.

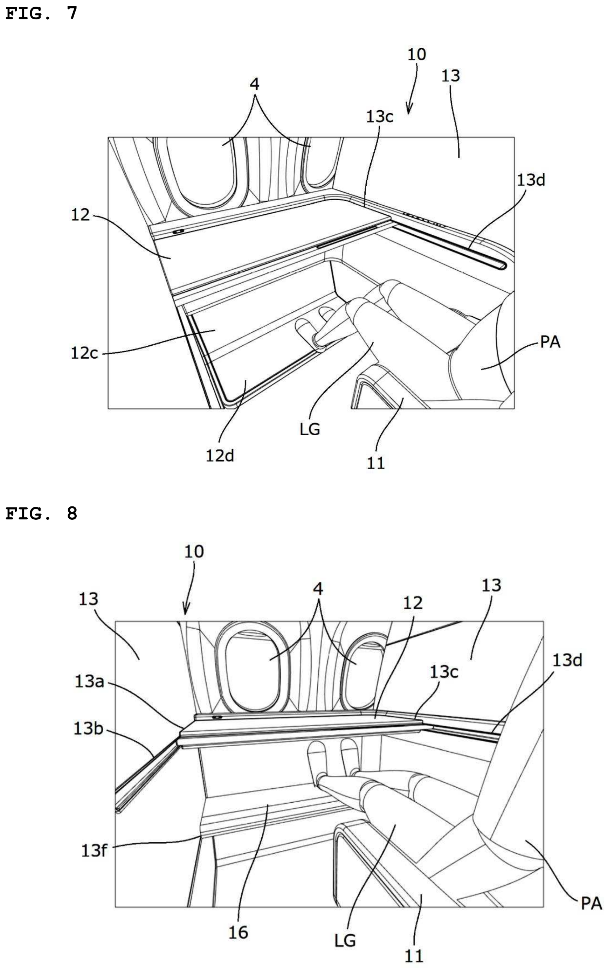

FIGs. 6 and 7 are perspective views illustrating a lower side of the table 12. With reference to FIGs. 4 and 6, an intermediate panel 12c is joined to an edge of the window 4 side of the fixed portion 12a of the table 12 excluding both ends thereof. A lower end of the intermediate panel 12c is connected to an edge on the window 4 side of a footrest panel 12d formed in a rectangular plate shape. That is, the fixed portion 12a, the intermediate panel 12c, and the footrest panel 12d are formed in an approximately C-shape when viewed in the direction of the front-rear direction axis L. When engaging the fixed portion 12a to the engagement long holes 13a and 13c of the partition panel 13, by abutting the end portion of the intermediate panel 12c against the partition panel 13, the partition panel 13 may function as a stopper indicating the appropriate assembling position. Further, the footrest panel 12d may be fixed to the partition panel 13 by engaging the longitudinal ends thereof to engagement long holes provided on the partition panel 13.

The passenger PA seated on the seat 11 may place the feet of his/her legs LG on the footrest panel 12d disposed on the lower side of the table 12, as illustrated in FIG. 7, and thereby, the passenger PA may enjoy a pleasant flight which may take a long time.

### (First Modified Example)

FIG. 8 is a perspective view illustrating a lower side of the table 12 according to a first modified example. In the present modified example, an intermediate panel and a footrest panel are not disposed, and instead, an ottoman 16 is disposed. The ottoman 16 has a long plate shape which extends along the front-rear direction axis L, and on an upper surface thereof is disposed an artificial leather and a cushion member. The ottoman 16 is fixed to the partition panel 13 by having its longitudinal ends engaged to engagement long holes 13f (only one of which is illustrated) disposed on the partition panels 13. However, the ottoman 16 may also be fixed by connecting the same to the fixed portion 12a of the table 12.

The passenger PA seated on the seat 11 may place his/her calves and thigh portions of his/her leg portions LG on the ottoman 16 disposed on the lower side of the table 12, such that the passenger PA may enjoy a pleasant flight which may take a long time.

Further, a rack on which a bag may be placed may be formed in a manner fixed to the fixed portion 12a of the table 12 or the partition wall 13 on the lower side of the table 12.

### (Second Modified Example)

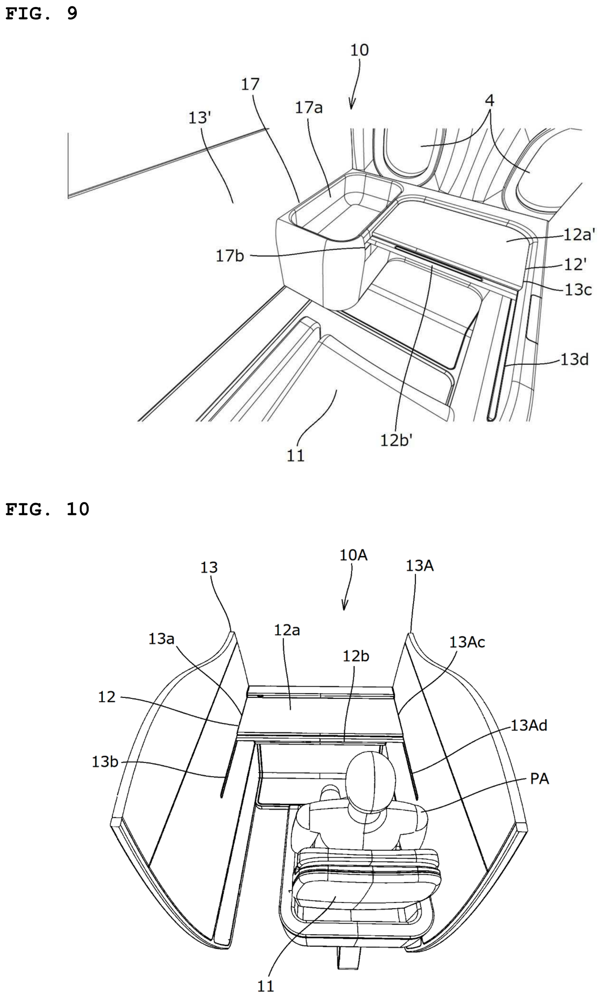

FIG. 9 is a perspective view illustrating a periphery of a table 12' according to a second modified example. In the present modified example, a bassinet unit 17 having a bottomed rectangular tubular shape is fixed to a left side partition panel 13' in FIG. 9. A bassinet 17a on which an infant may be laid is formed on an upper portion of the bassinet unit 17. A gap through which a passenger walking toward the aisle 3 may easily pass is formed between the bassinet unit 17 and the seat 11. The bassinet unit 17 constitutes a member that supports one end portion in the width direction of the table 12'.

A left end of the fixed portion 12a' of the table 12' is fixed to the bassinet unit 17, and a right end of the fixed portion 12a' is engaged to the engagement long hole 13c of the partition panel 13 disposed on the right side, by which both ends of the fixed portion 12a' are fixed. Further, a left end of the movable portion 12b' is engaged slidably to a slit groove 17b of the bassinet unit 17, and a right end of the movable portion 12b' is engaged to the slit groove 13d of the partition panel 13 disposed on the right side, by which both ends of the movable portion 12b' are retained in a slidable manner.

### (Second Embodiment)

FIG. 10 is a view of a seat unit 10A according to a second embodiment taken from an aisle side over the seat, with the windows not shown. Compared to the embodiment illustrated in FIG. 2, the seat unit 10A according to the present embodiment is not equipped with a frame. Instead, an engagement long hole 13Ac and a slit groove 13Ad adjacent thereto are formed on a partition wall 13A disposed on a right side in the drawing. The heights from the floor surface 2 and the lengths of the engagement long holes 13a an 13Ac and the slit grooves 13b and 13Ad arranged facing each other mutually correspond. That is, in a case where the table 12 is arranged on both sides interposing the partition wall 13A, the engagement long holes 13a and 13Ac and the slit grooves 13b and 13Ad are formed facing both side surfaces of the partition wall 13A. Configurations other than those described above will not be described, since they are similar to the above-described embodiments.

Even according to the present embodiment, longitudinal end portions of the fixed portion 12a of the table 12 are engaged to the engagement long holes 13a and 13Ac, by which both ends of the fixed portion 12a are fixed to the partition panels 13 and 13A. Further, both ends of the movable portion 12b in the longitudinal direction are engaged slidably to the slit grooves 13b and 13Ad. Thereby, the movable portion 12b is enabled to move relatively with respect to the fixed portion 12a.

Various modifications of the above embodiments are enabled within the range not deviating from the scope of the present invention.

### [Description of the Reference Numeral]

1 aircraft
2 floor surface
3 aisle
4 window
6 front side wall
7 space
10, 10A seat unit
11 seat
12, 12' table
13, 13', 13A partition panel 15 screen unit
16 ottoman
17 bassinet unit

## Claims

1. A seat unit (10, 10A) configured to be disposed between a window and an aisle (3) of an aircraft (1), comprising:
a seat (11) including a seat section configured to be disposed on the window side, and a backrest configured to be disposed on the aisle (3) side; and
a table (12, 12') disposed between the window (4) and the seat section and supported in a fixed manner at least at two points,
wherein a center axis of the seat (11) is configured to be approximately orthogonal to an axis of the aircraft (1) in a front-rear direction when viewed along a direction orthogonal to a floor surface (2) of the aircraft (1);
wherein :
a partition panel (13, 13', 13A) is arranged adjacent to the seat (11), and wherein one end portion of the table (12, 12') in a width direction is supported on the partition panel (13, 13', 13A); and
a bassinet (17) is disposed on a member supporting the other end portion of the table (12, 12') in the width direction.

2. The seat unit according to claim 1, wherein the table (12, 12') includes a fixed portion that is supported in a fixed manner on the partition panel (13, 13', 13A), and a movable portion that is movable with respect to the fixed portion, wherein a groove (13b, 13d, 13Ad) to which the movable portion is engaged is formed on the partition panel (13, 13', 13A), and the movable portion is moved along the groove.

3. The seat unit (10, 10A) according to any one of claims 1 or 2, wherein a screen for having a projector image projected thereon is projected is disposed in a manner capable of being wound up on an upper portion of the table (12, 12') and facing the seat (11).

4. The seat unit (10, 10A) according to any one of claims 1 to 3, wherein a footrest panel (12d) or an ottoman fixed (16) to the table (12, 12') or a partition panel (13, 13', 13A) is arranged on a lower side of the table (12, 12').
